# EUROPÄISCHE PATENTANMELDUNG

(11) **EP 0 903 362 A1**
(43) Veröffentlichungstag der Anmeldung: **24.03.1999**
(21) Anmeldenummer: 98117531.8
(22) Anmeldetag: 16.09.1998
(51) Int. Cl.: C08G 18/65, C08G 18/66

(54) **Verfahren zur Herstellung von Polyurethanschaumstoffen**

(30) Priorität: 19.09.1997 DE 19741257
(71) Anmelder: BASF AKTIENGESELLSCHAFT, 67056 Ludwigshafen (DE)
(72) Erfinder: Falke, Peter, Dr., 01987 Schwarzheide (DE); Rotermund, Inge, 01990 Ortrand (DE); Schuster, Marita, 01968 Senftenberg (DE); Klippert, Steffen, Dr., 01987 Schwarzheide (DE)

(57) **Zusammenfassung**

Die Erfindung betrifft ein Verfahren zur Herstellung von Polyurethanschaumstoffen durch Umsetzung von
a) organischen und/oder modifizierten organischen Di- und/oder Polyisocyanaten mit
b) mindestens einer höhermolekularen Verbindung mit mindestens zwei reaktiven Wasserstoffatomen,
c) mindestens einer Verbindung mit drei bis acht, vorzugsweise drei bis sechs reaktiven Wasserstoffatomen und
d) niedermolekularen Kettenverlängerungs- und/oder Vernetzungsmitteln mit mindestens zwei reaktiven Wasserstoffatomen
   in Gegenwart von
e) Treibmitteln
f) Katalysatoren und gegebenenfalls
g) weiteren Hilfsmitteln und Zusatzstoffen,
das dadurch gekennzeichnet ist, daß c) ethylenoxidreiche Addukte mit einem Ethylenoxidgehalt von mehr als 50 Gew.-% und einer OH-Zahl von 200 bis 800 mg KOH/g und d) mehrfunktionelle Kettenverlängerungs- und/oder Vernetzungsmittel mit einer OH-Zahl von mehr als 700 mg KOH/g sind.

Gegenstände der Erfindung sind weiterhin der nach diesem Verfahren hergestellte Polyurethanschaumstoff sowie dessen Verwendung als Polstermaterial.

## Beschreibung

Die Erfindung betrifft ein Verfahren zur Herstellung von Polyurethanschaumstoffen durch Umsetzung von
a) organischen und/oder modifizierten organischen Di- und/oder Polyisocyanaten mit
b) mindestens einer höhermolekularen Verbindung mit mindestens zwei reaktiven Wasserstoffatomen sowie einer Kombination aus
c) mindestens einer Verbindung mit drei bis acht, vorzugsweise drei bis sechs reaktiven Wasserstoffatomen und
d) niedermolekularen Kettenverlängerungs- und/oder Vernetzungsmitteln mit mindestens zwei reaktiven Wasserstoffatomen
   in Gegenwart von
e) Treibmitteln
f) Katalysatoren und gegebenenfalls
g) weiteren Hilfsmitteln und Zusatzstoffen.

Nach diesem Verfahren werden insbesondere Polyurethanweichschäume mit verbesserter Härte und erhöhter Beständigkeit gegen eine Feucht-Wärme-Alterung hergestellt.

Die Herstellung von Polyurethanen durch Umsetzung von organischen Di- und/oder Polyisocyanaten mit Verbindungen mit mindestens zwei reaktiven Wasserstoffatomen, beispielsweise Polyoxyalkylenpolyaminen und/oder vorzugsweise organischen Polyhydroxylverbindungen, insbesondere Polyetherolen mit Molekulargewichten von z.B. 300 bis 6000, und gegebenfalls Kettenverlängerungs- und/oder Vernetzungsmitteln mit Molekulargewichten bis ca. 400 in Gegenwart von Katalysatoren, Treibmitteln, Flammschutzmitteln, Hilfsmitteln und/oder Zusatzstoffen ist bekannt und wurde vielfach beschrieben. Eine zusammenfassende Übersicht über die Herstellung von Polyurethanschaumstoffen wird beispielsweise im Kunststoff-Handbuch, Band VII, "Polyurethane", 1. Auflage 1966, herausgegeben von Dr. R. Vieweg und Dr. A. Höchtlen und 2. Auflage, 1983, sowie 3. Auflage, 1993, herausgegeben von Dr. G. Oertel (Carl Hanser Verlag, München) gegeben.

Zur Erzielung von Weichschäumen ausreichender Härte, die zudem beständig gegenüber einer Feucht-Wärme-Alterung sind, hat es zahlreiche Veröffentlichungen gegeben.

So beschreibt EP-A-449609 einen hochelastischen Weichschaum, wobei eine Eigenschaftsverbesserung insbesondere beim Druckverformungsrest durch erhöhte 2,4-TDI-Anteile erreicht werden soll. Das bietet die Möglichkeit, die Anteile an Polymerpolyol zu verringern.

In EP-A-346670 werden Blockweichschäume sehr niedriger Dichte bei einer niedrigen Kennzahl hergestellt. Hier wird ein beigemischtes sechsfunktionelles kurzkettiges Vernetzerpolyol für die erforderliche Schaumstabilisierung herangezogen.

In EP-A-496420 werden flammwidrige Weichschäume beschrieben. Hier wird eine Kombination aus stickstoffhaltigen kurzkettigen Vernetzerpolyolen und einem dreifunktionellen Polyol, das mindestens zwei sekundäre OH-Gruppen aufweist, beansprucht.

WO 95/15990 beschreibt die Verwendung von hochfunktionellen, insbesondere sechsfunktionellen, Polyolen für hochelastische Weichschäume. Diethanolamin als Kettenverlängerer/Vernetzer wird in Anteilen von bis zu 5 Gew.-Tl. als Beispiel angegeben.

In EP-A-704468 werden hochfunktionelle Polymerpolyole für Weichschäume eingesetzt. Die verwandten Rezepturen orientieren insbesondere auf die erfindungsgemäße Verwendung von höheren Anteilen an Diolen als Kettenverlängerer.

In EP-A-350868 wird ein hochfunktionelles höhermolekulares Polymerpolyol beansprucht. Als unterstützendes Poyol wird ein Polyetherol mit einem Molekulargewicht zwischen 450 und 3000 und einem Ethylenoxidgehalt > 30% genannt. Als Vernetzer werden Ethanolaminspezies und Zucker genannt.

In EP-A-406702 werden als Vernetzerpoylole Ethylenoxidaddukte des Glycerins genannt, wobei Vernetzer einer Funktionalität von 2 - 8 beansprucht werden. Dabei werden Kombinationen mit Diethanolamin beansprucht. Durch die verwendeten Zellöffnerpolyole soll im Indexbereich 105 - 120 ein sehr geschlossenzelliger Schaum resultieren.

In EP-A-731120 werden Schaumstoffe mit verbessserter Feucht-Wärme-Alterung genannt, die ein Polyolgemisch verwenden, das aus mindestens einem Polyol der Funktionalität 3,5 - 8 mit einem Ethylenoxidgehalt von 10 - 30% und mindestens einem Polyetherol der Funktionalität 2 - 8 mit einem Ethylenoxidgehalt von 50 - 95% besteht. Als Vernetzer werden Alkanolaminderivate genannt. Zur Härteerhöhung können Füllstoffe mit verwendet werden.

Der vorliegenden Erfindung lag die Aufgabe zugrunde, Polyurethanschaumstoffe mit verbesserter Härte und erhöhter Feucht-Wärme-Beständigkeit zu schaffen, wobei die übrigen Eigenschaften des Schaumstoffes nicht verschlechtert sein sollten.

Überraschenderweise wurde diese Aufgabe dadurch gelöst, daß neben der üblichen, mindestens eine höher molekulare Verbindung mit mindestens zwei reaktiven Wasserstoffatomen enthaltende Komponente (b) eine spezielle Kombination aus mindestens einer Verbindung mit drei bis acht, vorzugsweise drei bis sechs, reaktiven Wasserstoffatomen (c) und niedermolekularen Kettenverlängerungs- und/oder Vernetzungsmitteln mit mindestens zwei reaktiven Wasserstoffatomen (d) eingesetzt wird, wobei die Komponenten (c) ethylenoxidreiche Addukte mit einem Ethylenoxidgehalt von mehr als 50 Gew.-% und einer OH-Zahl von 200 bis 800 mg KOH/g und (d) mehrfunktionelle Kettenverlängerungs- und/oder Vernetzungsmittel mit einer OH-Zahl von mehr als 700 mg KOH/g sind.

Gegenstand der Erfindung ist demzufolge eine Verfahren zur Herstellung von Polyurethanschaumstoffen durch Umsetzung von
a) organischen und/oder modifizierten organischen Di- und/oder Polyisocyanaten mit
b) mindestens einer höher molekularen Verbindung mit mindestens zwei reaktiven Wasserstoffatomen,
c) mindestens einer Verbindung mit drei bis acht, vorzugsweise drei bis sechs reaktiven Wasserstoffatomen und
d) niedermolekularen Kettenverlängerungs- und/oder Vernetzungsmitteln mit mindestens zwei reaktiven Wasserstoffatomen
   in Gegenwart von
e) Treibmitteln
f) Katalysatoren und gegebenenfalls
g) weiteren Hilfsmitteln und Zusatzstoffen,
dadurch gekennzeichnet, daß (c) ethylenoxidreiche Addukte mit einem Ethylenoxidgehalt von mehr als 50 Gew.-% und einer OH-Zahl von 200 bis 800 mg KOH/g und (d) mehrfunktionelle Kettenverlängerungs- und/oder Vernetzungsmittel mit einer OH-Zahl von mehr als 700 mg KOH/g sind.

Gegenstände der Erfindung sind weiterhin der nach diesem Verfahren hergestellte Polyurethanschaumstoff sowie dessen Verwendung als Polstermaterial.

Erfindungsgemäß wird bei der Durchführung des Verfahrens zur Herstellung der Polyurethanschaumstoffe neben üblichen Komponenten eine spezielle Kombination aus mindestens einer Verbindung mit drei bis acht, vorzugsweise drei bis sechs, reaktiven Wasserstoffatomen (c) und niedermolekularen Kettenverlängerungs- und/oder Vernetzungsmitteln mit mindestens zwei reaktiven Wasserstoffatomen (d) eingesetzt.

Als Komponente (c) werden ethylenoxidreiche Addukte verwendet, vorzugsweise Ethylenoxid-Addukte von Glycerin, Trimethylolpropan, Pentaerythrit oder deren beliebige Gemische. Als Starter für die Ethylenoxidaddukte kommen neben und als Gemisch mit den oben genannten Verbindungen weitere höherfunktionelle Starter in Frage, wie beispielsweise Sorbit, Di-Trimethylolpropan, Triethanolamin, Diethanolamin sowie deren Gemische. Ebenfalls verwendbar sind weitere Starter mit einer Funktionalität von 3 bis 8.

Das Ethylenoxid wird mit dem Starter bzw. Startergemisch in üblicher Weise umgesetzt.

Die OHZ derartiger Ethylenoxidaddukte liegt im Bereich zwischen 200 und 800 mg KOH/g, vorzugsweise 400 und 700 und insbesondere 500 und 700 mg KOH/g.

Der Ethylenoxidgehalt der Komponente c) beträgt mindestens 50 Gew.-%, vorzugsweise mehr als 90 Gew.-%.

Die höherfunktionellen Verbindungen (c) werden vorzugsweise in Anteilen von 0,5 bis 10 Gew.-%, insbesondere in Anteilen von 1 bis 8 Gew.-%, bezogen auf das Gewicht der Komponenten (b) bis (g), eingesetzt.

Als Komponente (d) werden mehrfunktionelle Kettenverlängerungs- und/oder Vernetzungsmittel mit einer OH-Zahl von mehr als 700 mg KOH/g, vorzugsweise Glycerin, verwendet. Daneben sind auch Trimethylolpropan, Pentaerythrit oder Gemische der genannten Verbindungen verwendbar. Außer diesen erfindungsgemäß eingesetzten können in geringem Umfang auch die weiter unten aufgeführten üblichen Kettenverlängerungs- und/oder Vernetzungsmittel zugegeben werden.

Die Komponente (d) wird vorzugsweise in Anteilen von 0,5 bis 6 Gew.-%, insbesondere bevorzugt in Anteilen von 0,5 bis 4 Gew.-%, bezogen auf das Gewicht der Komponenten (b) bis (g), eingesetzt.

Das Molverhältnis von (c) zu (d) liegt vorzugsweise im Bereich von 10 bis 0,3, insbesondere von 3,0 bis 0,3.

In einer besonders bevorzugten Ausführungsform werden als Komponente (c) ein dreifunktionelles Polyol auf Basis von Ethylenoxid mit einer OH-Zahl von 530 mg KOH/g (Lupranol® VP 9209) in einer Menge von 5 bis 6 Gew.-% und als Komponente (d) Glycerin in einer Menge von 3 Gew.-% verwendet.

Zur Herstellung der erfindungsgemäßen Polyurethanschaumstoffe finden neben der oben beschriebenen Kombination der Komponenten (c) und (d) die in der Polyurethanchemie üblichen Einsatzstoffe Verwendung, zu denen beispielhaft folgendes ausgeführt wird:
a) Als organische und/oder modifizierte organische Di- und/oder Polyisocyanate kommen die an sich bekannten aliphatischen, cycloaliphatischen araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylen-diisocyanat-1,4 und vorzugsweise Hexamethylendiisocyanat-1,6; cycloaliphatische Diisocyanate wie Cyclohexan-1,3- und -1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomeren-gemische, 4,4'-, 2,2'- und 2,4'-Dicyclohexlylmethandiisocyanat sowie die entsprechenden Isomerengemische, und vorzugsweise aromatische Di- und Polyisocyanate, wie z.B. 2,4- und 2,6-Toluylendiisocyanat (-TDI) und die entsprechenden Isomerengemische, 4,4'-, 2,4'- und 2,2'-Diphenylmethandiisocyanat -MDI) und die entsprechenden Isomerengemische , Mischungen aus 4,4'- und 2,2'-MDI, Polyphenylpolymethylenpolyisocyanate, Mischungen aus 4,4'-, 2,4'- und 2,2'-MDI und Polyphenylpolymethylenpolyisocyanaten (Roh-MDI) und Mischungen aus Roh-MDI und TDI. Die organischen Di- und Polyisocyanate können einzeln oder in Form ihrer Mischungen eingesetzt werden.
   Geeignet sind auch sogenannte modifizierte mehrwertige Isocyanate, d.h. Produkte, die durch chemische Umsetzung organischer Di-und/oder Polyisocyanate erhalten werden. Beispielhaft genannt seien Ester-, Harnstoff-, Biuret-, Allophanat-, Isocyanurat- und vorzugsweise Carbodiimid-, Uretonimin- und/oder Urethangruppen enthaltende Di- und/oder Polyisocyanate. Im einzelnen kommen beispielsweise in Betracht: Urethangruppen enthaltende Prepolymere mit einem NCO-Gehalt von 14 bis 2,8 Gew.-%, vorzugsweise von 12 bis 3,5 Gew.-%, oder Quasiprepolymere mit einem NCO-Gehalt von 35 bis 14 Gew.-%, vorzugsweise von 34 bis 22 Gew.-%, wobei mit Urethangruppen modifizierte Polyisocyanate aus TDI, insbesondere einem NCO-Gehalt von 43 bis 28 Gew.-%, und solche aus 4,4'-MDI, 4,4'- und 2,4'-MDI-Isomerenmischungen oder Roh-MDI, insbesondere einen NCO-Gehalt von 28 bis 14 Gew.-%, insbesondere bevorzugt von 28 bis 22 Gew.-%, bezogen auf das Gesamtgewicht, aufweisen und hergestellt werden durch Umsetzung von Diolen, Oxalkylenglykolen und/oder Polyoxyalkylenglykolen mit Molekulargewichten von 62 bis 6000, vorzugsweise von 134 bis 4200 mit TDI, 4,4'-MDI, MDI-Isomerengemischen und/oder Roh-MDI z.B. bei Temperaturen von 20 bis 110°C, vorzugsweise von 50 bis 90°C, wobei als Oxalkylen- und Polyoxyalkylenglykole, die einzeln oder als Gemische eingesetzt werden können, beispielhaft genannt seien: Diethylen-, Dipropylen-, Polyoxyethylen-, Polyoxypropylen- und Polyoxypropylen-polyoxyethylen-glykole, Carbodiimidgruppen und/oder Uretonimingruppen enthaltende Polyisocyanate, z.B. auf MDI-Isomeren- und/oder TDI-Basis.
   Die modifizierten Polyisocyanate können miteinander oder mit unmodifizierten orga-nischen Polyisocyanaten, wie z.B. 2,4'-, 4,4'-MDI, Roh-MDI, 2,4- und/oder 2,6-TDI, gegebenenfalls gemischt werden.
   Besonders bewährt haben sich als organische Polyisocyanate und kommen daher vorzugsweise zur Anwendung: Mischungen aus TDI und Roh-MDI oder Mischungen aus modifizierten Urethangruppen enthaltenden organischen Polyisocyanaten mit einem NCO-Gehalt von 44 bis 15 Gew.-%, insbesondere solche auf Basis von TDI, 4,4'-MDI, MDI-Isomerengemischen oder Roh-MDI und insbesondere Roh-MDI mit einem MDI-Isomerengehalt von 30 bis 80 Gew.%, vorzugsweise von 30 bis 55 Gew.-%.
b) Als höhermolekulare Verbindungen mit mindestens zwei reaktiven Wasserstoffatomen werden zweckmäßigerweise solche mit einer Funktionalität von 2 bis 4, vorzugsweise 2 bis 3, und einem Molekulargewicht von 300 bis 8000, vorzugsweise von 300 bis 5000 verwendet.
   Bewährt haben sich z. B. Polyetherpolyamine und/oder vorzugsweise Polyole, ausgewählt aus der Gruppe der Polyetherpolyole, Polyesterpolyole, Polythioetherpolyole, Polyesteramide, hydroxylgruppenhaltigen Polyacetale und hydroxylgruppenhaltigen aliphatischen Polycarbonaten oder Mischungen aus mindestens zwei der genannten Polyole. Vorzugsweise Anwendung finden Polyesterpolyole und/oder Polyetherpolyole. Die Hydroxylzahl der Polyhydroxylverbindungen beträgt dabei in aller Regel 20 bis 80 und vorzugsweise 28 bis 56.
   Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydriden eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Tei-len und insbesondere Adipinsäure. Beispiele für zwei- und mehrwertige Alkohole, insbesondere Diole, sind: Ethandiol, Diethylenglykol, 1,2- bzw. 1,3-Propandiol, Dipro-pylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.
   Zur Herstellung der Polyesterpolyole können die organischen z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C, gegenbenfalls unter vermindertem Druck bis zu der gewünschten Säurezahl, die vorteilhafterweise kleiner als 10, vorzugsweise kleiner als 2, ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2, polykondensiert. Die erhaltenen Polyesterpolyole besitzen vorzugsweise eine Funktionalität von 2 bis 4, insbesondere 2 bis 3, und ein Molekulargewicht von 480 bis 3000, insbesondere 600 bis 2000.
   Insbesondere als Polyole verwendet werden jedoch Polyetherpolyole, die nach bekannten Verfahren, beispielsweise durch anionische Polymerisation mit Alkalihydroxiden, wie z.B. Natrium- oder Kaliumhydroxid, oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 4, vorzugsweise 2 bis 3, reaktive Wasserstoffatome gebunden enthält, oder durch kationische Polymerisation mit Lewissäuren, wie Antimonpentachlorid, Borfluorid-Etherat u.a., oder Bleicherde, als Katalysatoren aus einem oder mehreren Alkylenoxiden mit 2 bis 4 Kohlenstoffatomen im Alkylenrest hergestellt werden.
   Für spezielle Einsatzzwecke können auch monofunktionelle Starter in den Polyetheraufbau eingebunden werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegenbenfalls N-mono- N,N- und N,N'-dialkylsubstituierte Diamine mit 1 bis 4 Kohlenstoffatomen im Alkylrest, wie gegebenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin und 4,4'-, 2,4'- und 2,2'-Diaminodiphenylmethan. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin und Ammoniak. Vorzugsweise verwendet werden mehrwertige, insbesondere zwei- und/oder dreiwertige Alkohole, wie Ethandiol, Propandiol-1,2 und -2,3, Diethylenglykol, Dipropylenglykol, Butandiol-1,4, Hexandiol-1,6, Glycerin, Trimethylolpropan und Pentaerythrit.
   Die Polyetherpolyole, vorzugsweise Polyoxypropylen- und Polyoxypropylenpoly-oxyethylenpolyole, besitzen eine Funktionalität von vorzugsweise 2 bis 4 und insbesondere 2 bis 3 und Molekulargewichte von 300 bis 8000, vorzugsweise 300 bis 6000 und insbesondere 1000 bis 5000, und geeignete Polyoxytetramethylenglykole ein Molekulargewicht bis ungefähr 3500.
   Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyetherpolyolen analog den Angaben der deutschen Patentschriften 1111394, 1222669 (US-A-3304273, 3383351, 3523093), 1152536 (GB 1040452) und 1152537 (GB 987618) hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B-011752 (US-A-4304708), US-A-4374209 und DE-A-3231497.
   Die Polyetherpolyole können ebenso wie die Polyesterpolyole einzeln oder in Form von Mischungen verwendet werden. Ferner können sie mit den Pfropfpolyether-polyolen oder Polyesterpolyolen sowie den hydroxylgruppenhaltigen Polyesteramiden, Polyacetalen, Polycarbonaten und/oder Polyetherpolyaminen gemischt werden.
   Als hydroxylgruppenhaltige Polyacetale kommen z.B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyetherpolyamine können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US-A-3267050) oder die teilweise oder vollständige Aminierung von Polyoxyalkylenpolyolen mit Aminen oder Ammoniak in Gegenwart von Wasserstoff und Katalysatoren (DE-A-1215373).
c) Erfindungsgemäß werden bei der Herstellung der Polyurethanschaumstoffe als drei bis acht, vorzugsweise drei bis sechs, reaktiven Wasserstoffatome enthaltende Verbindungen ethylenoxidreiche Addukte, wie sie weiter oben beschrieben wurden, eingesetzt.
d) Zur Herstellung der erfindungsgemäßen Polyurethanschaumstoffe werden die weiter oben beschriebenen Kettenverlängerungs- und/oder Vernetzungsmittel eingesetzt. Zur Modifizierung der mechanischen Eigenschaften kann sich jedoch der Zusatz weiterer Kettenverlängerungsmittel, Vernetzungsmittel oder gegebenenfalls auch Gemische davon als vorteilhaft erweisen. Als weitere Kettenverlängerungs- und/oder Vernetzungsmittel verwendet werden Diole und/oder Triole mit Molekulargewichten kleiner als 400, vorzugsweise 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4- und 1,3,5-Trihydroxycyclohexan, und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern zur Herstellung der Polyurethanschaumstoffe weitere Kettenverlängerungsmittel, Vernetzungsmittel oder Mischungen davon Anwendung finden, kommen diese in einer Menge von 0 bis 20 Gew.-% vor.
e) Als Treibmittel können die aus der Polyurethanchemie allgemein bekannten Fluorchlorkohlenwasserstoffe (FCKW) sowie hoch- und/oder perfluorierte Kohlen-wasserstoffe verwendet werden. Der Einsatz dieser Stoffe wird jedoch aus ökologischen Gründen stark eingeschränkt bzw. ganz eingestellt. Neben den HFCKW und HFKW bieten sich insbesondere aliphatische und/oder cycloaliphatische Kohlenwasserstoffe, insbesondere Pentan und Cyclopentan, oder Acetale, wie z. B. Methylal, als Alternativtreibmittel an. Diese physikalischen Treibmittel werden üblicherweise der Polyolkomponente des Systems zugesetzt. Sie können jedoch auch in der Isocyanatkomponete oder als Kombination sowohl der Polyolkomponente als auch der Isocyanatkomponente zugesetzt werden. Möglich ist auch ihre Verwendung zusammen mit hoch- und/oder perfluorierten Kohlenwasserstoffen, in Form einer Emulsion der Polyolkomponente. Als Emulgatoren, sofern sie Anwendung finden, werden üblicherweise oligomere Acrylate eingesetzt, die als Seitengruppen Polyoxyalkylen- und Fluoralkanreste gebunden enthalten und einen Fluorgehalt von ungefährt 5 bis 30 Gew.-% aufweisen. Derartige Produkte sind aus der Kunststoffchemie hinreichend bekannt, z.B. EP-A 351614.
   Die eingesetzte Menge des Treibmittels bzw. der Treibmittelmischung liegt dabei bei 1 bis 25 Gew.-%, vorzugsweise 1 bis 15 Gew.-%, jeweils bezogen auf die Komponenten (b) bis (g).
   Weiterhin ist es möglich und üblich, als Treibmittel der Aufbaukomponente (b) Wasser in einer Menge von 0,5 bis 15 Gew.-%, vorzugsweise 1 bis 5 Gew.-%, bezogen auf die Aufbaukomponenten (b) bis (g), zuzusetzen. Der Wasserzusatz kann in Kombination mit dem Einsatz der anderen beschriebenen Treibmittel erfolgen.
f) Als Katalysatoren zur Herstellung von Polyurethanschaumstoffen werden insbesondere Verbindungen verwendet, die die Reaktion der reaktiven Wasserstoffatome, insbesondere hydroxylgruppenenthaltender Verbindungen der Komponenten (b), (c) und (d) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat, und die Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetra-methylethylendiamn, N,N,N',N'-Tetramethylbutandiamin, N,N,N',N'-Tetramethyl-hexandiamin-1,6, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan, und Alkanol-amin-verbindungen, wie Triethanolamin, Triisopropanolamin, N-Methyl- und N-Ethyldiethanolamin und Dimethylethanolamin.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxid, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination, bezogen auf das Gewicht der Aufbaukomponenten (b) bis (g).
g) Der Reaktionsmischung zur Herstellung der Polyurethanschaumstoffe können gegebenfalls noch weitere Hilfsmittel und/oder Zusatzstoffe einverleibt werden. Genannt seien beispielsweise Flammschutzmittel, oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Geeignete Flammschutzmittel sind beispielsweise Trikresylphosphat, Tris-(2-chlorethyl)phosphat, Tris-(2-chlorpropyl)phosphat, Tetrakis-(2-chlorethyl)-ethylendi-phosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aliumiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Besonders wirksam erweisen sich dabei Zusätze an Melamin. Im allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Aufbaukomponenten (b) bis (g) zu verwenden.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze der Ricinusölsulfate, oder von Fettsäuren sowie Salzen von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylenmischpolymerisate und andere Organopoylsiloxane, oxethylierte Alkylphenole, oxethylierte Fettalkohole, Paraffinöle, Ricinusöl-, bzw. Ricinolsäureester, Türkischrotöl und Erdnußöl, und Zellregler, wie Parafffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Aufbaukomponenten (b) bis (g), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe, wie silikatische Mineralien, beispielsweise Schichtsilikate, wie Antigorit, Serpentin, Hornblenden, Ampibole, Chrisotil, Talkum; Metalloxide, wie Kaolin, Aluminiumoxide, Titanoxide und Eisenoxide, Metallsalze, wie Kreide, Schwerspat und anorganische Pigmente, wie Cadmiumsulfid, Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Kohle, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (g) einverleibt, wobei jedoch der Gehalt an Matten, Vliesen und Geweben aus natürlichen und synthetischen Fasern Werte bis 80 Gew.-% erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoffhandbuch, Polyurethane, Band VII, Hanser-Verlag München, Wien, 1., 2. und 3. Auflage, 1966, 1983 und 1993 zu entnehmen.

Zur Herstellung der Polyurethanschaumstoffe werden die Komponenten (a) bis (g) in solchen Mengen zur Umsetzung gebracht, daß das Äquivalenzverhältnis der NCO-Gruppen der Komponente (a) zur Summe der reaktiven Wasserstoffatome der Komponenten (b) bis (g) 0,60 bis 1,25:1, vorzugsweise 0,90 bis 1,15:1, beträgt.

Polyurethanschaumstoffe nach dem erfindungsgemäßen Verfahren werden vorteilhafterweise nach dem one-shot-Verfahren, beispielsweise mit Hilfe der Hochdruck- oder Niederdruck-Technik in offenen oder geschlossenen Formwerkzeugen, beispielsweise metallischen Formwerkzeugen hergestellt. Üblich ist auch das kontinuierliche Auftragen des Reaktionsgemisches auf geeigneten Bandstraßen zur Erzeugung von Schaumblöcken.

Als besonders vorteilhaft hat es sich erwiesen, nach dem Zweikomponentenverfahren zu arbeiten und die Aufbaukomponenten (b), (c), (d), (e), (f) und gegebenenfalls (g) zu einer sogenannten Polyolkomponente, oft auch als Komponente A bezeichnet, zu vereinigen und als Isocyanatkomponente, oft auch als Komponente B bezeichnet, die Aufbaukomponente (a) und gegebenenfalls Treibmittel (e) zu verwenden. Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann mechanisch mittels eines Rührers, mittels einer Rührschnecke oder durch eine Hochdruckvermischung in einer Düse durchgeführt werden. Die Formwerkzeugtemperatur beträgt zweckmäßigerweise 20 bis 110°C, vorzugsweise 30 bis 65°C und insbesondere 35 bis 65°C.

Die nach dem erfindungsgemäßen Verfahren hergestellten Polyurethanschaumstoffe weisen eine Dichte von 10 bis 800 kg/m³, vorzugsweise von 35 bis 70 kg/m³ und insbesondere von 25 bis 50 kg/m³ auf. Besonders eignen sie sich als Polstermaterial im Möbel- und Autositzsektor, aber auch bei entsprechend höheren Rohdichten als Integralschaumteil im Autosicherheitsbereich.

Sie sind insbesondere geeignet für den Einsatz in Klimagebieten mit erhöhter Luftfeuchtigkeit, wo eine demgemäße Beständigkeit unbedingt erforderlich ist. Sie sind weiterhin geeignet, bei niedrigeren Dichten Schaumstoffe herzustellen, die trotz der niedrigeren Dichte ein ausreichendes mechanisches Anwendungsniveau besitzen und über einen längeren Zeitraum aufrechterhalten.

Die vorliegende Erfindung soll anhand der angeführten Beispiele erläutert werden, ohne jedoch hierdurch eine entsprechende Eingrenzung vorzunehmen.

### Beispiele 1 - 4 (Vergleichsbeispiele)

| | Beispiel 1 | Beispiel 2 | Beispiel 3 | Beispiel 4 |
|---|---|---|---|---|
| Lupranol® 2042 | 60,05 | 57,95 | 56,90 | 63,10 |
| Lupranol® 4100 | 30,00 | 30,00 | 30,00 | 30,00 |
| Glycerin | 1,00 | 3,00 | 4,00 | |
| Diethylenglykol | 2,00 | 2,00 | 2,00 | |
| Triethanolamin | | | | 3,20 |
| Lupranol® 2047 | 3,00 | 3,00 | 3,00 | |
| Lupragen® N201 | 0,40 | 0,50 | 0,55 | 0,15 |
| Lupragen® N206 | 0,25 | 0,25 | 0,25 | 0,25 |
| B 8680 | 0,30 | 0,30 | 0,30 | 0,30 |
| Wasser | 3,00 | 3,00 | 3,00 | 3,00 |
| RD (Kern) | 37,00 | 36,70 | * | 36,60 |
| DVR,70°C | 84,70 | 33,40 | * | 70,30 |
| DVR, 40°C,98%RH. | 91,50 | 70,10 | * | 83,90 |
| StH, 50% | 4,20 | 5,40 | * | 4,20 |

| | | | | |
|---|---|---|---|---|
| KZ 100; * Schaumstörung | | | | |
| Lupranol® 2042 OH-Zahl 28 mg KOH/g, Polyetherol auf Basis Propylen- und Ethylenoxid (BASF), Lupranol® 2047 OH-Zahl 42 mg KOH/g, Polyetherol auf Basis Propylen- und Ethylenoxid (BASF) Lupranol® 4100 OHZ 24 mg KOH/g, Polymerpolyol auf Basis Acrylnitril / Styren (BASF), Lupragen® N201 Aminkatalysator (BASF), Lupragen® N206 Aminkatalysator (BASF), B 8680 Silikonstabilisator (Goldschmidt), RD (Kern) Kernrohdichte in kg/m³, DRV Druckverformungsrest bei angegebener Temperatur, gemessen nach Methode D'Essai 1046, RH relative Luftfeuchte, StH 50% Stauchhärte - Methode D'Essai 1003 | | | | |

### Beispiele 5 - 8 (erfindungsgemäß)

| | Beispiel 5 | Beispiel 6* | Beispiel 7 | Beispiel 8 |
|---|---|---|---|---|
| Lupranol® 2042 | 53,30 | 53,30 | 77,05 | 55,05 |
| Lupranol® 4100 | 30,00 | 30,00 | 10,00 | 30,00 |
| Glycerin | 0,60 | 0,60 | 3,00 | 3,00 |
| Lupranol® 2047 | 4,00 | 4,00 | | |
| Lupranol® VP 9236 | 8,50 | 8,50 | | |
| Lupranol® VP 9209 | | | 5,00 | 7,00 |
| Lupragen® N201 | 0,15 | 0,15 | 0,30 | 0,40 |
| Lupragen® N206 | 0,15 | 0,15 | 0,25 | 0,25 |
| XFH 2584 | | | | 0,30 |
| B 8680 | 0,30 | 0,30 | 0,40 | |
| Wasser | 3,00 | 3,00 | 4,00 | 3,00 |
| RD | 40,00 | 40,00 | 37,00 | 36,00 |
| DVR,70°C | 18,20 | 25,40 | 17,50 | 16,00 |
| DVR, 40°C,98%RH. | 30,60 | 36,40 | 21,80 | 23,90 |
| StH, 50% | 8,00 | 11,20 | 4,70 | 5,70 |

| | | | | |
|---|---|---|---|---|
| * KZ 110 | | | | |
| Lupranol® VP 9209 OHZ 530 mg KOH/g, dreifunktionelles Polyol auf Basis von Ethylenoxid (BASF), Lupranol® VP 9236 OHZ 605 mg KOH/g, dreifunktionelles Polyol auf Basis von Ethylenoxid (BASF), XFH 2584 Dabco XFH 2584 - Silikonstabilisator (Air Products) | | | | |

## Patentansprüche

1. Verfahren zur Herstellung von Polyurethanschaumstoffen durch Umsetzung von
a) organischen und/oder modifizierten organischen Di- und/oder Polyisocyanaten mit
b) mindestens einer höhermolekularen Verbindung mit mindestens zwei reaktiven Wasserstoffatomen,
c) mindestens einer Verbindung mit drei bis acht, vorzugsweise drei bis sechs reaktiven Wasserstoffatomen und
d) niedermolekularen Kettenverlängerungs- und/oder Vernetzungsmitteln mit mindestens zwei reaktiven Wasserstoffatomen
in Gegenwart von
e) Treibmitteln
f) Katalysatoren und gegebenenfalls
g) weiteren Hilfsmitteln und Zusatzstoffen,
dadurch gekennzeichnet, daß (c) ethylenoxidreiche Addukte mit einem Ethylenoxidgehalt von mehr als 50 Gew.-% und einer OH-Zahl von 200 bis 800 mg KOH/g und (d) mehrfunktionelle Kettenverlängerungs- und/oder Vernetzungsmittel mit einer OH-Zahl von mehr als 700 mg KOH/g sind.

2. Verfahren nach Anspruch 1, dadurch gekennzeichnet, daß die höherfunktionellen Verbindungen (c) in Anteilen von 0,5 bis 10 Gew.-%, bezogen auf das Gewicht der Komponenten (b) bis (g), eingesetzt werden.

3. Verfahren nach Anspruch 1, dadurch gekennzeichnet, daß die höherfunktionellen Verbindungen (c) in Anteilen von 1 bis 8 Gew.-%, bezogen auf das Gewicht der Komponenten (b) bis (g), eingesetzt werden.

4. Verfahren nach einem der Ansprüche 1 bis 3, dadurch gekennzeichnet, daß die mehrfunktionellen Kettenverlängerungs- und/oder Vernetzungsmittel (d) in Anteilen von 0,5 bis 6 Gew.-%, bezogen auf das Gewicht der Komponenten (b) bis (g), eingesetzt werden.

5. Verfahren nach einem der Ansprüche 1 bis 3, dadurch gekennzeichnet, daß die mehrfunktionellen Kettenverlängerungs- und/oder Vernetzungsmittel (d) in Anteilen von 0,5 bis 4 Gew.-%, bezogen auf das Gewicht der Komponenten (b) bis (g), eingesetzt werden.

6. Verfahren nach einem der Ansprüche 1 bis 5, dadurch gekennzeichnet, daß das Molverhältnis von (c) zu (d) im Bereich von 10 bis 0,3, vorzugsweise von 3,0 bis 0,3, liegt.

7. Verfahren nach einem der Ansprüche 1 bis 6, dadurch gekennzeichnet, daß als Komponente (c) vorzugsweise Ethylenoxid-Addukte von Glycerin, Trimethylolpropan, Pentaerythrit oder deren Gemische verwendet werden.

8. Verfahren nach einem der Ansprüche 1 bis 7, dadurch gekennzeichnet, daß als Komponente (d) Glycerin verwendet wird.

9. Polyurethanschaumstoffe, enthaltend mindestens eine höher molekulare Verbindung mit mindestens zwei reaktiven Wasserstoffatomen (b) sowie mindestens eine Kombination aus mindestens einer Verbindung mit drei bis acht, vorzugsweise drei bis sechs, reaktiven Wasserstoffatomen (c) und mindestens einem niedermolekularen Kettenverlängerungs- und/oder Vernetzungsmittel mit mindestens zwei reaktiven Wasserstoffatomen (d), dadurch gekennzeichnet, daß als Komponente (c) ethylenoxidreiche Addukte mit einem Ethylenoxidgehalt von mehr als 50 Gew.-% und einer OH-Zahl von 200 bis 800 mg KOH/g in Anteilen von 0,5 bis 10 Gew.-%, bezogen auf das Gewicht der Komponenten (b) bis (g), und als Komponente d) mehrfunktionelle Kettenverlängerungs- und/oder Vernetzungsmittel mit einer OH-Zahl von mehr als 700 mg KOH/g in Anteilen von 0,5 bis 6 Gew.-%, bezogen auf das Gewicht der Komponenten (b) bis (g), eingesetzt werden.

10. Polyurethanschaumstoffe gemäß Anspruch 9, dadurch gekennzeichnet, daß die Komponenten (c) und (d) in einem Molverhältnis von 10 bis 0,3, vorzugsweise von 3,0 bis 0,3, eingesetzt werden.

11. Verwendung der Polyurethanschaumstoffe gemäß Anspruch 9 oder 10 als Polstermaterial im Möbel- und Automobilbereich.
